# EUROPEAN PATENT APPLICATION

(11) **EP 2 736 231 A1**
(43) Date of publication of application: **28.05.2014**
(21) Application number: 12879841.0
(22) Date of filing: 30.06.2012
(51) Int. Cl.: H04M 1/725

(54) **METHOD OF DYNAMIC EXPRESSION DISPLAY AND MOBILE TERMINAL**

(71) Applicant: Huawei Technologies Co., Ltd, Shenzhen, Guangdong 518129 (CN)
(72) Inventor: JIANG, Changjun, Shenzhen Guangdong 518129 (CN); SHA, Xianjun, Shenzhen Guangdong 518129 (CN); WU, Longhai, Shenzhen Guangdong 518129 (CN)
(74) Representative: Pfenning, Meinig & Partner GbR
(86) International application number: PCT/CN2012/078001
(87) International publication number: WO 2014/000310

(57) **Abstract**

The present invention relates to the field of communications technologies, and in particular, to a method and a mobile terminal for dynamic display of an emotion. The method for dynamic display of an emoticon includes: obtaining, by a mobile terminal, a trigger event, where the trigger event is used to trigger dynamic display of an emoticon; and searching, by the mobile terminal and according to the trigger event, an emoticon package of the emoticon, and obtaining an animation instruction of the emoticon, where the emoticon package of the emoticon includes a media material file of the emoticon; and utilizing, by the mobile terminal, an animation capacity of the mobile terminal, and operating, according to the animation instruction of the emoticon, the media material file of the emoticon, so as to implement the dynamic display of the emoticon. By applying the present invention, because the mobile terminal implements, according to the animation instruction, an animation effect by invoking the animation capacity of the mobile terminal itself, the mobile terminal may utilize the animation capacity of the mobile terminal itself repeatedly to implement reuse of the animation effect of the emotion.

## Description

### FIELD OF THE INVENTION

The present invention relates to the field of communications technologies, and in particular, to a method and a mobile terminal for dynamic display of an emotion.

### BACKGROUND OF THE INVENTION

With the development of the mobile Internet and the spread of mobile terminals, instant messaging (IM: Instant Messaging) tools on mobile terminals have developed rapidly and provide a more convenient and more abundant communication manner than a short message and multimedia message for users. In an IM tool on a mobile terminal, an animated emotion, such as a "magic emotion" or a "funny emotion", is an important message form. An implementation manner of the animated emotion in the prior art uses a GIF picture to implement an animation effect.

The inventor finds that at least the following technical problems exist in the foregoing prior art: when the GIF picture implements an animation effect having a relatively long duration, because the animation effect of the GIF picture is in a GIF file, the GIF file has a too large size; and because each GIF file has a respective animation effect, reuse of the animation effect cannot be implemented.

### SUMMARY OF THE INVENTION

Embodiments of the present invention provide a method and a mobile terminal for dynamic display of an emotion, so as to implement a dynamic effect of the emotion in a more abundant manner.

An embodiment of the present invention provides a method for dynamic display of an emotion, which includes:
obtaining, by a mobile terminal, a trigger event, where the trigger event is used to trigger dynamic display of an emotion;
searching, by the mobile terminal and according to the trigger event, an emotion package of the emotion, and obtaining an animation instruction of the emotion, where the emotion package of the emotion includes a media material file of the emotion; and
utilizing, by the mobile terminal, an animation capacity of the mobile terminal, and operating, according to the animation instruction of the emotion, the media material file of the emotion, so as to implement the dynamic display of the emotion.

Another embodiment of the present invention provides a mobile terminal, which includes:
a trigger event obtaining unit, configured to obtain a trigger event, where the trigger event is used to trigger dynamic display of an emotion;
an animation instruction obtaining unit, configured to search, according to the trigger event, an emotion package of the emotion, and obtain an animation instruction of the emotion, where the emotion package of the emotion includes a media material file of the emotion; and
a display unit, configured to utilize an animation capacity of the mobile terminal, and operate the media material file of the emotion according to the animation instruction of the emotion, so as to implement the dynamic display of the emotion.

It may be seen from the foregoing technical solutions provided by the embodiments of the present invention that, because the emotion package obtained by the mobile terminal includes the media material file of the emotion and the animation instruction of the emotion, and because the animation instruction occupies a relatively small storage space, the size of the emotion package file is decreased; and at the same time, because the mobile terminal implements, according to the animation instruction, an animation effect by invoking the animation capacity of the mobile terminal itself, the mobile terminal may utilize the animation capacity of the mobile terminal itself repeatedly to implement reuse of the animation effect of the emotion.

### BRIEF DESCRIPTION OF THE DRAWINGS

To illustrate the technical solutions in the embodiments of the present invention, the following briefly describes the accompanying drawings needed for describing the embodiments. Apparently, the accompanying drawings in the following description merely show some embodiments of the present invention, and persons skilled in the art may derive other accompanying drawings from these accompanying drawings without creative efforts.
FIG. 1 is a flow chart of a method for dynamic display of an emotion according to an embodiment of the present invention;
FIG. 2 is a signaling flow chart of a method for dynamic display of an emotion according to an embodiment of the present invention; and
FIG. 3 is a schematic structural diagram of a mobile terminal according to an embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons skilled in the art based on the embodiments of the present invention without creative efforts shall fall within the protection scope of the present invention.

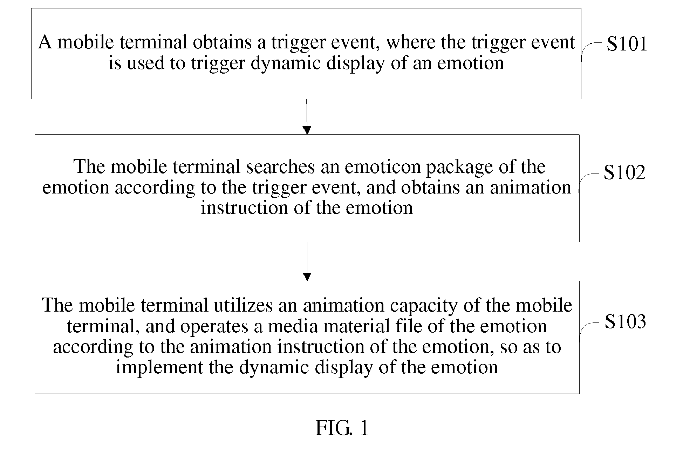

FIG. 1 describes a method for dynamic display of an emotion according to an embodiment of the present invention, where this embodiment specifically includes:

S101: A mobile terminal obtains a trigger event, where the trigger event is used to trigger dynamic display of an emotion.

To be more specific, the mobile terminal may obtain the trigger event sent by a sending end, or the mobile terminal obtains the trigger event triggered when a user operates an input device of the mobile terminal.

S102: The mobile terminal searches an emotion package of the emotion according to the trigger event, and obtains an animation instruction of the emotion. The emotion package of the emotion includes a media material file and the animation instruction of the emotion, where the media material file of the emotion refers to a file that provides a basic material for a dynamic effect of the emotion and includes, but is not limited to: a still picture, an audio file, or a GIF picture; and the animation instruction of the emotion is used to instruct and operate an animation effect achieved by the emotion and may include a default animation instruction and a response animation instruction.

Furthermore, before the mobile terminal searches the emotion package of the emotion according to the trigger event, the method further includes:
receiving, by the mobile terminal, an identifier of the emotion, such as an emotion ID, sent by the sending end, and displaying a preview flag of the emotion, such as a thumbnail view of the emotion, on the mobile terminal, so that the user may easily trigger the trigger event by operating the preview flag, such as, clicking the preview flag on a touch screen; and
obtaining, by the mobile terminal and according to the identifier of the emotion, the emotion package of the emotion from an emotion server.

S103: The mobile terminal utilizes an animation capacity of the mobile terminal, and operates the media material file of the emotion according to the animation instruction of the emotion, so as to implement the dynamic display of the emotion.

The animation capacity of the mobile terminal includes a calculating capacity and a display capacity, where the calculating capacity refers to that the mobile terminal calculates the media material file of the emotion according to the animation instruction to obtain an expressive form in which the media material file of the emotion needs to be displayed; and the display capacity refers to that the mobile terminal combines, according to the animation instruction, the media material file of the emotion, the expressive form of a calculated media material file of the emotion, and a basic output effect of the mobile terminal, so as to implement the dynamic display capacity of the emotion. The basic output effect of the mobile terminal refers to an effect implemented by utilizing abundant output devices of the mobile terminal, and includes sound, vibration, light, backlight blink, and so on.

Therefore, the utilizing, by the mobile terminal, the animation capacity of the mobile terminal and operating, according to the animation instruction of the emotion, the media material file of the emotion, so as to implement the dynamic display of the emotion specifically includes:
utilizing, by the mobile terminal, the calculating capacity in the animation capacity and calculating, according to the animation instruction of the emotion, the media material file of the emotion to obtain the expressive form in which the media material file of the emotion needs to be displayed; and
utilizing, by the mobile terminal, the display capacity in the animation capacity and combining, according to the animation instruction of the emotion, the media material file of the emotion, the expressive form in which the calculated media material file of the emotion needs to be displayed, and the basic output effect of the mobile terminal, so as to implement the dynamic display of the emotion.

It may be seen from the foregoing embodiment that, because the emotion package obtained by the mobile terminal includes the media material file of the emotion and the animation instruction of the emotion and because the animation instruction occupies a relatively small storage space, the size of the emotion package file is decreased; and at the same time, because the mobile terminal implements, according to the animation instruction, the animation effect by invoking the animation capacity of the mobile terminal itself, the mobile terminal may utilize the animation capacity of the mobile terminal itself repeatedly to implement reuse of the animation effect of the emotion.

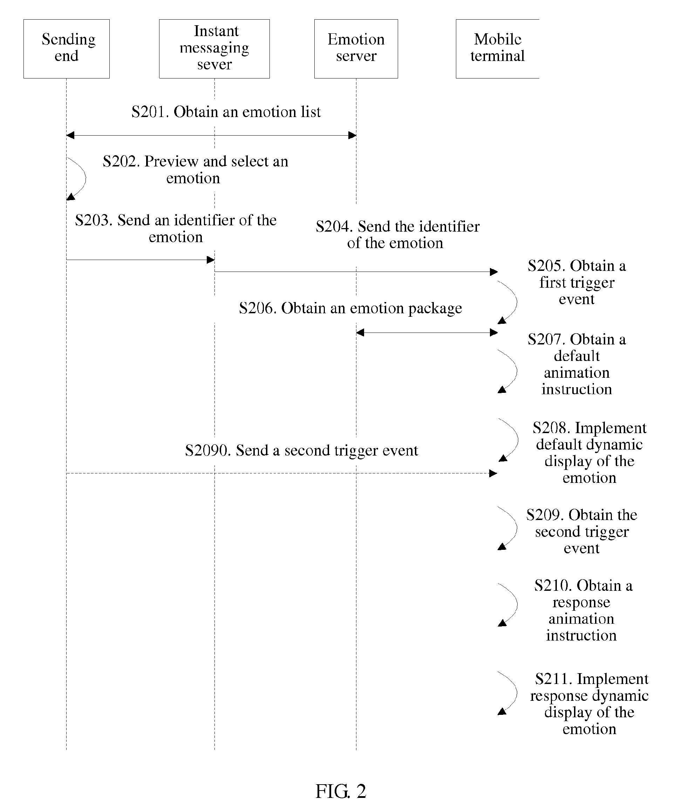

FIG. 2 describes a signaling flow of a method for dynamic display of an emotion according to an embodiment of the present invention. This embodiment is applied in a scenario where an emotion is transmitted in a network and a mobile terminal dynamically displays the emotion. In the present invention, an animation instruction in an emotion package includes a default animation instruction and a response animation instruction, where the default animation instruction is used to instruct default dynamic display of an emotion, and the response animation instruction is used to instruct response dynamic display of the emotion. This embodiment specifically includes:

S201: A sending end obtains an emotion list from an emotion server. The sending end may be a mobile terminal device.

S202: After obtaining the emotion list, the sending end previews the emotion list and selects an emotion.

S203 to S204: The sending end sends an identifier of the emotion, such as an emotion ID or an emotion URL, to an instant server according to a selected emotion; and the instant server sends the identifier of the emotion to a recipient mobile terminal after obtaining the identifier of the emotion.

S205: The recipient mobile terminal obtains a first trigger event triggered when a user operates an input device of the mobile terminal, where the first trigger event is used to trigger default dynamic display of the emotion.

To be more specific, for example, the mobile terminal may display a preview flag of the emotion on the mobile terminal after obtaining the identifier of the emotion, where the preview flag may be a picture flag such as an emotion thumbnail view. A user determines whether to trigger the emotion after previewing the preview flag on the mobile terminal. If the emotion is to be triggered and the user clicks the preview flag through the input device of the mobile terminal, such as a touch screen, the first trigger event is triggered and the first trigger event is obtained by the mobile terminal. It should be noted that, the user may also trigger the first trigger event through other input devices of the mobile terminal, such as a gyroscope, an acceleration sensor, or a microphone MIC, which is not limited by the present invention.

S206: After obtaining the first trigger event, the mobile terminal obtains, according to the foregoing received identifier of the emotion, the emotion package of the emotion.

The emotion package of the emotion includes a media material file of the emotion and a default animation instruction of the emotion, where the media material file of the emotion refers to a file that provides a basic material for a dynamic effect of the emotion, and includes, but is not limited to: a still picture, an audio file, or a GIF picture; and the default animation instruction of the emotion is used to instruct and operate a default animation effect achieved by the emotion.

Optionally, if the mobile terminal locally stores an emotion package that corresponds to the identifier of the emotion, the mobile terminal may directly obtain the emotion package locally without obtaining from the emotion server.

S207: After obtaining the first trigger event, the mobile terminal searches the emotion package of the emotion according to the first trigger event, and obtains the default animation instruction that corresponds to the first trigger event.

S208: The mobile terminal utilizes an animation capacity of the mobile terminal, and operates the media material file of the emotion according to the default animation instruction of the emotion, so as to implement default dynamic display of the emotion.

To be more specific, the animation capacity of the mobile terminal includes a calculating capacity and a display capacity, where the calculating capacity refers to that the mobile terminal calculates, according to the animation instruction, the media material file of the emotion to obtain an expressive form in which the media material file of the emotion needs to be displayed; and the display capacity refers to that the mobile terminal combines, according to the animation instruction, the media material file of the emotion, the expressive form of the calculated media material file of the emotion, and a basic output effect of the mobile terminal, so as to implement a dynamic display capacity of the emotion. The basic output effect of the mobile terminal refers to an effect implemented by utilizing abundant output devices of the mobile terminal, and includes sound, vibration, light, backlight blink, and so on.

Therefore, the mobile terminal utilizes the calculating capacity in the animation capacity, and calculates, according to the default animation instruction, the media material file of the emotion, so as to obtain the expressive form in which the media material file of the emotion needs to be displayed; and the mobile terminal utilizes the display capacity in the animation capacity, and combines, according to the default animation instruction, the media material file of the emotion, the expressive form in which the calculated media material file of the emotion needs to be displayed, and the basic output effect of the mobile terminal, so as to implement the dynamic display of the emotion.

S209: The mobile terminal obtains a second trigger event.

The second trigger event is used to trigger response dynamic display of the emotion. Unlike the first trigger event, the second trigger event is triggered in an interaction process after the emotion is displayed in a default manner, where the interaction includes interaction of two aspects: on one aspect, in the process of interacting between the user and the emotion in the mobile terminal, the user operates an input device of the mobile terminal to perform the trigger; on the other aspect, in step S2090, the sending end sends the second trigger event to the mobile terminal, the mobile terminal receives the second trigger event, and in this case, the second trigger event is triggered by a user of the sending end by operating the emotion of the sending end; therefore, the interaction in this case may be understood as an interaction that the user of the sending end operates the emotion of the mobile terminal (that is, a receiving end), that is, a network interaction that the user of the sending end controls the display of the emotion in the mobile terminal through a network and obviously, the trigger event defined in the sending end and that defined in the mobile terminal are uniform.

Therefore, the obtaining, by the mobile terminal, the second trigger event specifically includes: obtaining, by the mobile terminal, the second trigger event triggered when the user operates the input device of the mobile terminal, or obtaining, by the mobile terminal, the second trigger event sent by the sending end.

S210: After obtaining the second trigger event, the mobile terminal searches the emotion package of the emotion according to the second trigger event, and obtains the response animation instruction that corresponds to the second trigger event, where the emotion package of the emotion further includes the response animation instruction.

S211: The mobile terminal utilizes the animation capacity of the mobile terminal, and operates the media material file of the emotion according to the response animation instruction of the emotion, so as to implement the response dynamic display of the emotion.

Because the animation capacity of the mobile terminal includes the calculating capacity and the display capacity, step S211 specifically includes:
utilizing, by mobile terminal, the calculating capacity in the animation capacity, and calculating, according to the response animation instruction of the emotion, the media material file of the emotion to obtain a response expressive form in which the media material file of the emotion needs to be displayed; and utilizing, by the mobile terminal, the display capacity in the animation capacity, and combining, according to the response animation instruction of the emotion, the media material file of the emotion, the response expressive form in which the calculated media material file of the emotion needs to be displayed, and the basic output effect of the mobile terminal, so as to implement the response dynamic display of the emotion.

It may be known from above that, the dynamic display of the emotion on the mobile terminal maybe implemented through an instruction event triggered by the user, that is, the interaction between the user and the emotion in the mobile terminal is implemented, which adds the interactive effect of the emotion; and because the mobile terminal has abundant output devices, such as sound, vibration, and backlight blink, the basic output effects of the mobile terminal are abundant. The mobile terminal combines, according to the animation instruction, the media material file of the emotion, the expressive form in which the calculated media material file of the emotion needs to be displayed, and the basic output effect of the mobile terminal, which may implement more abundant emotion display effects having more dimensions, for example, an emotion is displayed with the effects of animation, sound, and light at the same time, so as to add the sense of reality to the display effect of the emotion.

It may be seen from the foregoing embodiment that, because the emotion package obtained by the mobile terminal includes the media material file of the emotion and the animation instruction of the emotion and because the animation instruction occupies a relatively small storage space, the size of the emotion package file is decreased; and at the same time, because the mobile terminal implements, according to the animation instruction, the animation effect by invoking the animation capacity of the mobile terminal itself, the mobile terminal may utilize the animation capacity of the mobile terminal itself repeatedly, so as to implement reuse of the animation effect of the emotion.

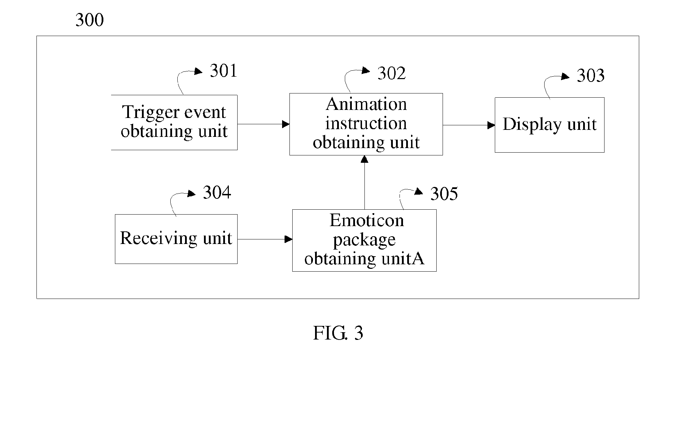

FIG. 3 describes the structure of a mobile terminal 300 configured to implement dynamic display of an emotion according to an embodiment of the present invention, where this embodiment specifically includes:
a trigger event obtaining unit 301, configured to obtain a trigger event, where the trigger event is used to trigger dynamic display of an emotion; where, to be more specific, the trigger event obtaining unit 301 is configured to obtain the trigger event sent by a sending end, or obtain the trigger event triggered when a user operates an input device of the mobile terminal;
an animation instruction obtaining unit 302, configured to search, according to the trigger event obtained by the trigger event obtaining unit 301, an emotion package of the emotion, and obtain an animation instruction of the emotion;
where the emotion package of the emotion includes a media material file and the animation instruction of the emotion, and the media material file of the emotion refers to a file that provides a basic material for a dynamic effect of the emotion, which includes, but is not limited to: a still picture, an audio file, or a GIF picture; and the animation instruction of the emotion is used to instruct and operate an animation effect achieved by the emotion and may include a default animation instruction and a response animation instruction; and
a display unit 303, configured to utilize an animation capacity of the mobile terminal 300 and operate the media material file of the emotion according to the animation instruction obtained by animation instruction obtaining unit 302, so as to implement the dynamic display of the emotion.

Because the animation capacity of the mobile terminal 300 includes a calculating capacity and a display capacity, the display unit 303 is specifically configured to utilize the calculating capacity in the animation capacity, and calculate, according to the animation instruction of the emotion, the media material file of the emotion to obtain an expressive form in which the media material file of the emotion needs to be displayed; and configured to utilize the display capacity in the animation capacity, and combine, according to the animation instruction of the emotion, the media material file of the emotion, a default expressive form in which the calculated media material file of the emotion needs to be displayed, and a basic output effect of the mobile terminal, so as to implement the dynamic display of the emotion. The basic output effect of the mobile terminal refers to an effect implemented by utilizing abundant output devices of the mobile terminal, and includes sound, vibration, light, backlight blink, and so on.

Furthermore, the mobile terminal 300 further includes:
a receiving unit 304, configured to receive an identifier of the emotion sent by the sending end; and
an emotion package obtaining unit 305, configured to obtain, according to the identifier of the emotion received by the receiving unit 304, the emotion package of the emotion from an emotion server.

It may be seen from the foregoing embodiment that, because the emotion package obtained by the mobile terminal includes the media material file of the emotion and the animation instruction of the emotion and because the animation instruction occupies a relatively small storage space, the size of the emotion package file is decreased; and at the same time, because the mobile terminal implements, according to the animation instruction, the animation effect by invoking the animation capacity of the mobile terminal itself, the mobile terminal may utilize the animation capacity of the mobile terminal itself repeatedly, so as to implement reuse of the animation effect of the emotion.

Persons skilled in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM), and like.

Specific cases are used for illustrating principles and implementation manners of the present invention. The descriptions of the embodiments are merely for understanding the method of the present invention. Meanwhile, persons skilled in the art may make modifications to specific implementation manners and application ranges according to the ideas of the present invention. In conclusion, the content of the specification shall not be construed as a limitation to the present invention.

## Claims

1. A method for dynamic display of an emotion, comprising:
obtaining, by a mobile terminal, a trigger event, wherein the trigger event is used to trigger dynamic display of an emotion;
searching, by the mobile terminal and according to the trigger event, an emotion package of the emotion, and obtaining an animation instruction of the emotion, wherein the emotion package of the emotion comprises a media material file of the emotion; and
utilizing, by the mobile terminal, an animation capacity of the mobile terminal, and operating, according to the animation instruction of the emotion, the media material file of the emotion, so as to implement the dynamic display of the emotion.

2. The method for dynamic display according to claim 1, wherein the obtaining, by the mobile terminal, the trigger event comprises:
obtaining, by the mobile terminal, the trigger event sent by a sending end; or
obtaining, by the mobile terminal, the trigger event triggered when a user operates an input device of the mobile terminal.

3. The method for dynamic display according to claim 1 or 2, wherein the animation capacity of the mobile terminal comprises a calculating capacity and a display capacity; and the utilizing, by the mobile terminal, the animation capacity of the mobile terminal and operating, according to the animation instruction of the emotion, the media material file of the emotion comprises:
utilizing, by the mobile terminal, the calculating capacity in the animation capacity, and calculating, according to the animation instruction of the emotion, the media material file of the emotion to obtain an expressive form wherein the media material file of the emotion needs to be displayed; and
utilizing, by the mobile terminal, the display capacity in the animation capacity, and combining, according to the animation instruction of the emotion, the media material file of the emotion, a default expressive form wherein a calculated media material file of the emotion needs to be displayed, and a basic output effect of the mobile terminal, so as to implement the dynamic display of the emotion.

4. The method for dynamic display according to any one of claims 1 to 3, wherein before the searching, by the mobile terminal and according to the trigger event, the emotion package of the emotion, the method further comprises:
receiving, by the mobile terminal, an identifier of the emotion sent by the sending end; and
obtaining, by the mobile terminal and according to the identifier of the emotion, the emotion package of the emotion from an emotion server.

5. A mobile terminal configured to implement dynamic display of an emotion, comprising:
a trigger event obtaining unit, configured to obtain a trigger event, wherein the trigger event is used to trigger dynamic display of an emotion;
an animation instruction obtaining unit, configured to search, according to the trigger event, an emotion package of the emotion, and obtain an animation instruction of the emotion, wherein the emotion package of the emotion comprises a media material file of the emotion; and
a display unit, configured to utilize an animation capacity of the mobile terminal, and operates the media material file of the emotion according to the animation instruction of the emotion, so as to implement the dynamic display of the emotion.

6. The mobile terminal according to claim 5, wherein the trigger event obtaining unit is specifically configured to:
obtain the trigger event sent by a sending endconfigured to:; or
obtain the trigger event triggered when a user operates an input device of the mobile terminal.

7. The mobile terminal according to claim 5 or 6, wherein the animation capacity of the mobile terminal comprises a calculating capacity and a display capacity; and the display unit is specifically configured to:
utilize the calculating capacity in the animation capacity, and calculate, according to the animation instruction of the emotion, the media material file of the emotion to obtain an expressive form wherein the media material file of the emotion needs to be displayed; and
utilize the display capacity in the animation capacity, and combine, according to the animation instruction of the emotion, the media material file of the emotion, a default expressive form wherein a calculated media material file of the emotion needs to be displayed, and a basic output effect of the mobile terminal, so as to implement the dynamic display of the emotion.

8. The mobile terminal according to any one of claims 5 to 7, further comprising:
a receiving unit, configured to receive an identifier of the emotion sent by the sending end; and
an emotion package obtaining unit, configured to obtain, according to the identifier of the emotion, the emotion package of the emotion from an emotion server.
